# EUROPEAN PATENT APPLICATION

(11) **EP 4 621 643 A1**
(43) Date of publication of application: **24.09.2025**
(21) Application number: 24165277.5
(22) Date of filing: 21.03.2024
(51) Int. Cl.: G06N 3/042, G06N 3/08, G06N 5/022, G06N 20/00

(54) **METHOD FOR OBTAINING DOMAIN-INFORMED ML/AI MODEL, METHOD FOR ANALYSING AND/OR PREDICTING DRIVE SYSTEM AND/OR DRIVE APPARATUS BEHAVIOR, CONTROL APPARATUS, DRIVE APPLICATION SYSTEM, AND COMPUTER PROGRAM PRODUCT**

(71) Applicant: ABB SCHWEIZ AG, 5400 Baden (CH)
(72) Inventor: SONG, Chen, 69115 Heidelberg (DE); ASHIWAL, Virendra, 68542 Heddesheim (DE); BECKER, Pascal, 76676 Graben-Neudorf (DE); SCHOCH, Nicolai, 69120 Heidelberg (DE)
(74) Representative: Maiwald GmbH

(57) **Abstract**

A method for obtaining a domain-informed machine learning/artificial intelligence, ML/AI, model for drive analytics. The method comprises obtaining first data indicative of a set of data points, wherein each data point is associated with a behavior of a drive apparatus and/or drive system. The method further comprises obtaining second data indicative of domain knowledge comprising physics knowledge associated with a behavior of the drive apparatus and/or drive system and/or with an environment of the drive apparatus and/or drive system. The method further comprises training a machine learning/artificial intelligence, ML/AI, model by jointly utilizing the first data and the second data to obtain the domain-informed ML/AI model for drive analytics.

## Description

### FIELD OF THE INVENTION

The invention relates to a method for obtaining a domain-informed ML/AI and to a method for analysing and/or predicting a drive system behavior and/or a drive apparatus behavior. The invention further relates to a control apparatus, a drive application system, and a computer program product.

### BACKGROUND

The continuous monitoring and real-time analysis of systems, apparatuses and/or applications, like the monitoring and real-time analysis of a motors' working conditions, for example, are crucial due to their exposure to harsh environments, including high temperatures, extreme vibrations, dust, and moisture. Moreover, to enhance reliability, to detect faults early, and to achieve predictive maintenance, it is essential for analytics applications to constantly process monitoring data for extracting valuable insights to make informed decisions.

Hence, several monitoring processes, analytics processes and controlling processes, like behavior monitoring, condition monitoring and/or anomaly detection, for example, are desired for drive systems including drive apparatuses and drive applications, for example for a drive/gateway-combination. Therefore, analytics-based algorithms and machine learning, ML, -based algorithms are being developed.

However, such analytics-based algorithms and ML-based algorithms may consume and require high amounts of data, ideally detailed and reliable data which allow to determine a behavior of the drive system, the drive apparatus or the drive application as accurate as possible. Such high amounts of data may be consumed and acquired from deployed drive systems and for training the analytics algorithms or ML models, so that they may then be used thereon-based for inference. The provision and acquisition of such high amounts of detailed and reliable data, however, may be challenging. Hence, there is room for improvement.

### SUMMARY

In view of the above, it is an object of the present disclosure to overcome at least part of the drawbacks today available in the monitoring, analysing and controlling of drive systems, drive apparatuses and drive applications.

Thus, according to several examples of the present disclosure, there are described methods, a control apparatus, a drive application system, a computer-readable storage medium, and a computer program product, which may participate in enabling monitoring, analysing and controlling of drive systems, drive apparatuses and drive applications.

In particular, to address one or more of the drawbacks as outlined above, there is provided, in a first aspect, a method for obtaining a domain-informed machine learning/artificial intelligence, ML/AI, model for drive analytics. The method comprises obtaining first data indicative of a set of data points, wherein each data point is associated with a behavior of a drive apparatus and/or drive system. The method further comprises obtaining second data indicative of domain knowledge comprising physics knowledge associated with a behavior of the drive apparatus and/or drive system and/or with an environment of the drive apparatus and/or drive system. The method further comprises training a machine learning/artificial intelligence, ML/Al, model by jointly utilizing the first data and the second data to obtain the domain-informed ML/AI model for drive analytics.

It shall be noted that the method may be a method for obtaining a domain-informed ML/AI model for drive analytics in an industrial drive application system. The domain-informed ML/Al model may be a domain-informed ML/Al model in an industrial drive application system and/or related to an industrial drive application system.

By drive apparatus and/or drive system also further drive elements are meant to be comprised, like a drive product or a drive application, for example.

It shall be noted that the domain-informed ML/Al model may be understood to represent a ML/Al model, which is informed about a certain domain upon which or in which it is applied. The behavior of a drive apparatus and/or drive system may be understood to represent a behavior at a certain operation. For example, a power consumption of a motor, a rotational speed of a component of a motor, how strongly a motor vibrates, a sound level of a motor, or a temperature measured at a motor may be indicative of a behavior of the motor. The behavior may be determined for a certain time and/or for a certain time period. Further, domain knowledge may be understood as knowledge about a certain domain, wherein physics knowledge or physics-based knowledge may be understood to represent a general knowledge in physics. The general knowledge in physics may comprise, for example, knowledge about physics laws, mathematical equations comprising equations which describe physical behavior, for example, or physics constraints. The environment of the drive apparatus and/or drive system may be understood to represent the environment in which the drive apparatus or the drive system is operating. Furthermore, the expression jointly utilizing may be understood as being used together, in combination or in a certain relationship or dependency to each other.

Due to the method according to the first aspect, on-premise deployment to enable physics-consistent in-time analysis on a drive system, drive apparatus and/or drive application is provided.

According to several examples of the present disclosure, the obtaining of the first data may comprise obtaining the set of data points from historic operational data and/or simulated operational data associated with behaviors of the drive apparatus and/or drive system. Additionally or alternatively, the obtaining of the first data may comprise obtaining, from a physics-consistent simulation tool and/or historic database, the set of data points in the form of a grid of scenario points associated with behaviors of the drive apparatus and/or drive system. Additionally or alternatively, the obtaining of the second data may comprise obtaining, from a physics-consistent simulation tool and/or historic database and/or a physics knowledge repository, the domain knowledge in the form of mathematical equations associated with behaviors of the drive apparatus and/or drive system and/or with the environment of the drive apparatus and/or drive system. It shall be noted that the mathematical equations comprise equations which describe physical behavior, for example.

The historic operational data may be understood to represent operational data from historic, past or previous operations of a drive apparatus and/or a drive system, for example. Hence, the simulated operational data may be understood to represent operational data, which are obtained through simulation. Further, the physics-consistent simulation may be understood to represent a simulation which is consistent with the physics laws, for example. The historic database may be understood to represent a database which stores historic data. The grid of scenario points or the scenario grid of points may be understood to comprehensively describe a potential drive behavior in the way of a mathematical basis (in the linear algebra sense). Moreover, the physics knowledge repository may be understood to represent physics laws, general physics knowledge available in literature, for example, mathematical equations which comprise equations which describe physical behavior, for example, or physics constraints.

Hence, to consider a potentially unrealistic drive behavior and/or a drive behavior which may be contradictive to physics or physics laws are reliably avoided for the training, due to the obtainment of the first and/or second data.

According to several examples of the present disclosure, the obtaining of the first data may further comprise determining the grid of scenario points to be indicative of the problem space and/or solution space for the domain-informed ML/Al model to work in.

The determined grid of scenario points may thus sparsely, but comprehensively enough, cover the entire problem space and/or solution space. This may allow for collecting suitably enough simulation scenario inputs, i.e. data points, for training a domain-informed ML/AI model, with an a-priori known maximal accuracy or minimal accuracy or maximal uncertainty or minimal uncertainty, for example.

According to several examples of the present disclosure, the training may comprise training the ML/AI model on the first data by using the second data as constraints and/or validations.

The second data as constraints and/or validations may comprise that the ML/Al model is trained on the first data, wherein physics laws, mathematical equations and/or physics constraints are satisfied or fulfilled. Hence, said in other words, operations of a drive apparatus and/or a drive system indicated by the first data are consistent with physics laws, mathematical equations and/or physics constraints.

Hence, results to be expected from the obtained domain-informed ML/AI model may be fully realistic and in full consistency with physics laws, mathematical equations and/or physics constraints.

According to several examples of the present disclosure, the method may further comprise deploying the obtained domain-informed ML/AI model on gateway level and/or drive level of the drive system.

Hence, transmission of data towards and from a cloud server at which a ML/AI model may be running is avoided.

According to several examples of the present disclosure, the method may further comprise obtaining additional data, wherein the additional data comprises at least one of additional first data and/or additional second data, and feedback on an output of the obtained domain-informed ML/AI model regarding the application of the obtained domain-informed ML/AI model on drive analytics. The method may further comprise updating the obtained domain-informed ML/AI model based on the obtained additional data. The updating may comprise retraining and/or fine-tuning the obtained domain-informed ML/AI model based on the obtained additional data.

Therefore, the obtained domain-informed ML/AI model may be adapted to new, varying or developing operations.

According to several examples of the present disclosure, the obtained domain-informed ML/AI model may be a physics-informed neural network, PINN. Specifically or alternatively, the physics knowledge is integrated into the loss function of the PINN.

Using a PINN as the base of analytics algorithms and/or monitoring algorithms guarantees that known physical behavior is given and taken as the reference for monitoring processes, controlling processes and analysing processes, like anomaly detection.

According to a second aspect, there is provided a method for analysing and/or predicting a behavior of a drive apparatus and/or drive system. The method comprises obtaining the domain-informed ML/AI model according to the method of the first aspect. The method further comprises obtaining third data from the drive apparatus and/or drive system, wherein the third data is indicative of operational data associated with the drive apparatus and/or drive system. The method further comprises inputting the third data into the domain-informed ML/AI model. The method further comprises, based on the inputting, analysing and/or predicting the behavior of the drive apparatus and/or drive system.

It shall be noted that the method may be a method for analysing and/or predicting a behavior of a drive apparatus and/or drive system in an industrial drive application system.

The analysing may comprise to analyse a current, i.e. a currently occurring behavior, wherein the predicting may comprise to predict a behavior that potentially occurs in future.

Due to the method according to the second aspect, on-premise deployment to enable physics-consistent in-time analysis on a drive system, drive apparatus and/or drive application is provided.

According to several examples of the present disclosure, the obtaining of the third data may comprise monitoring the drive apparatus and/or drive system; and collecting the third data based on the monitoring.

The monitoring may be a rea-time monitoring.

Hence, the monitoring, and thus the domain-informed ML/AI model, is suitable for real-time applications.

According to several examples of the present disclosure, the monitoring may comprise monitoring a behavior of the drive apparatus and/or drive system. The method may further comprise comparing the analysed and/or predicted behavior with the monitored behavior and/or the behavior being monitored. The method may further comprise initiating a measure for controlling the monitored behavior and/or the behavior being monitored based on a result of the comparing.

The monitored behavior may be understood to represent a behavior, which was previously monitored or monitored in the past, wherein the behavior being monitored may be understood to represent a real-time behavior, which is currently being monitored. Further, the measure for controlling the monitored behavior may be understood to represent any action, trigger or process, which results in a controlling of the behavior, for example that a rotational speed of a component of a motor is reduced.

Hence, damage of the drive apparatus and/or the drive system being monitored may be avoided, for example, since the initiated measure may allow for damage avoidance or damage mitigation.

According to several examples of the present disclosure, the analysing and/or predicting may comprises calculating key performance indicators, KPIs, associated with the analysed and/or predicted behavior. Additionally or alternatively, the monitoring may comprise determining KPIs associated with the drive apparatus and/or drive system based on the third data being indicative of measurement data of the drive apparatus and/or drive system. Additionally or alternatively, the comparing may comprise comparing the calculated KPls with the determined KPIs.

The measurement data may represent sensor data, for example, which measure a value indicative of a temperature, a vibration, a noise level, a power consumption or a movement of the drive apparatus and/or the drive system.

Hence, the drive apparatus and/or the drive system may be evaluated more precisely with more specific data being available. Hence, reliability in the analysing and/or predicting is increased and an uncertainty is reduced.

According to several examples of the present disclosure, the comparing may further comprise obtaining a predetermined deviation threshold; and determining whether the calculated KPls deviate from the determined KPls by more than the predetermined deviation threshold. The initiating may comprise initiating the measure for controlling the behavior being monitored if it is determined that the predetermined deviation threshold is exceeded.

The predetermined deviation threshold may be a fixed value set in advance by an operator, for example, or may be a relative value relative to a determined KPI, for example five percent of a KPI's value.

Hence, reliability in the initiating is increased and a potential unnecessary initiation of a measure, for example due to a one-time deviation but below the deviation threshold, is avoided.

According to several examples of the present disclosure, the initiating may comprise at least one of:
- outputting a notification indicative of the result of the comparing;
- triggering an operator to verify the result of the comparing;
- triggering a control mechanism to adapt and/or manipulate the operation or a KPI of the drive apparatus and/or drive system;
- triggering further measurements;
- triggering execution of further monitoring, control and/or optimization algorithms;
- triggering of further investigation of a behavior;
- triggering an uncertainty quantification;
- reducing a power supply to the drive apparatus and/or drive system;
- reducing a movement speed and/or rotational speed of components of the drive apparatus and/or drive system; and
- stopping the drive apparatus and/or drive system.

Hence, several different measures are available for accurately and appropriately controlling the behavior of the drive apparatus and/or drive system.

According to several examples of the present disclosure, the method may further comprise receiving feedback on the analysed and/or predicted behavior and/or on the result of the comparing; and based on the feedback, updating at least one of:
- the domain-informed ML/AI model according to the method of the first aspect,
- the obtaining of the third data,
- the analysing and/or predicting, and
- the comparing.

Hence, a quality and accuracy of the domain-informed ML/AI model, a data quality and data accuracy of the third data, and a quality and accuracy of the analysing, the predicting and the comparing may be increased.

According to a third aspect, there is provided a control apparatus, the control apparatus being configured to carry out the above-outlined method of the first aspect and/or the second aspect.

Due to the control apparatus according to the third aspect, on-premise deployment to enable physics-consistent in-time analysis on a drive system, drive apparatus and/or drive application is provided.

According to a fourth aspect, there is provided a control system comprising a first control apparatus according to the third aspect and/or a second control apparatus according to the third aspect. The first control apparatus configured to carry out the method of the first aspect, the second control apparatus configured to carry out the method of the second aspect. The first control apparatus and the second control apparatus are directly and/or indirectly communicatively connected.

Due to the control system according to the fourth aspect, on-premise deployment to enable physics-consistent in-time analysis on a drive system, drive apparatus and/or drive application is provided.

According to a fifth aspect, there is provided an automation system or drive application system comprising a first control apparatus according to the third aspect and/or a second control apparatus according to the third aspect and/or the control system according to the fourth aspect. The first control apparatus configured to carry out the method of the first aspect, the second control apparatus configured to carry out the method of the second aspect. The first control apparatus, the second control apparatus and/or the control system are directly and/or indirectly communicatively connected.

Due to the automation system according to the fifth aspect, on-premise deployment to enable physics-consistent in-time analysis on a drive system, drive apparatus and/or drive application is provided.

According to a sixth aspect, there is provided a computer-readable medium comprising instructions which, when executed by a computing system, cause the computing system to perform the method of the first aspect and/or of the second aspect. The computer-readable medium may be transitory or non-transitory, volatile or non-volatile.

Due to the computer-readable medium according to the sixth aspect, on-premise deployment to enable physics-consistent in-time analysis on a drive system, drive apparatus and/or drive application is provided.

According to a seventh aspect, there is provided a computer program product comprising instructions which, when executed by a computing system, enable or cause the computing system to perform the method of the first aspect and/or of the second aspect.

Due to the computer program product according to the seventh aspect, on-premise deployment to enable physics-consistent in-time analysis on a drive system, drive apparatus and/or drive application is provided.

According to an eight aspect, there is provided a computing system configured to perform the method of the first aspect and/or of the second aspect.

Due to the computing system according to the eight aspect, on-premise deployment to enable physics-consistent in-time analysis on a drive system, drive apparatus and/or drive application is provided.

According to a ninth aspect, there is provided a use of the domain-informed ML/Al model obtained according to the method of the first aspect and/or the second aspect.

Due to the use according to the ninth aspect, on-premise deployment to enable physics-consistent in-time analysis on a drive system, drive apparatus and/or drive application is provided.

The method of the first aspect and/or of the second aspect may be computer implemented.

Optional features of the first aspect and/or the second aspect may form part of any of the third to ninth aspects, mutatis mutandis.

By "automation system", according to several examples, it may also be meant an "industrial automation system", a "drive application system" or an "industrial drive application system", which may comprise and/or be associated with a ski lift system or a ship application, for example.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 schematically illustrates how to integrate domain knowledge in a neural network (NN) according to several examples of the present disclosure;
- Figure 2 illustrates a flowchart indicative of a method according to several examples of the present disclosure; and
- Figure 3 illustrates a designed architecture and data processing according to several examples of the present disclosure;
- Figure 4 illustrates a designed architecture and data processing according to several examples of the present disclosure;
- Figure 5 illustrates a schematic of a PINN according to several examples of the present disclosure; and
- - Figure 6 illustrates a flowchart indicative of a method according to several examples of the present disclosure.

### DETAILED DESCRIPTION

Nowadays, it is highly unlikely that all possible scenarios that may occur for a drive system, a drive apparatus and/or a drive application are covered in corresponding drive system training data, drive apparatus training data and/or drive application training data. Hence, not-covered scenarios during inference time are not covered either. Moreover, neural networks do not intrinsically consider and care about physics laws or any other domain knowledge.

However, in-depth domain knowledge about drives or drive products (e.g. drive apparatus, drive application) and drive systems is of great importance. Further, software tools may be used to simulate a behavior of particular drives such as under specified circumstances and given specific parameter settings. However, accessing in-depth domain knowledge may be difficult and simulation is pretty expensive. In addition, simulation cannot be executed on a drive/gateway combination itself. Hence, regarding these drawbacks, there is room for improvement.

In view of the above, it shall be noted that numerical simulations with physics-based mathematical modelling are compute-intensive, and are not possibly to be done in real-time and on-premise, i.e. on drive/gateway combination, which however would be needed, for example for condition and health monitoring purposes. Further, a purely data-driven ML-based "fake simulation", i.e. a data assimilation, e.g., using "synthetic data", is not satisfying either, since sometimes an unphysical behavior is simulated. Hence, such "fake simulation" is too unreliable and idealized, since, e.g., not necessarily all physically possible data and/or scenarios are covered by such "fake simulation".

Further, analysing a drive apparatus, drive application or drive system often involves sophisticated algorithms and demand higher computing capability. Traditionally, running these analytics applications on the cloud has been the norm, as gateway and drive levels lack sufficient computing power to support such computations. However, running the analytics applications on the cloud brings about concerns related to data security, privacy, dependence on internet connectivity, and performance variability.

To address these issues, there is an opportunity to execute analytics applications directly on the drive/gateway level. Doing so could increase the certainty and robustness of analytics and reduce the need for excessive data transfer to the cloud. Until today, analytics models are primarily data-driven, where data quality and biases play a vital role in obtaining high-quality analytics models and/or ML/AI models. Nevertheless, such models may suffer from overfitting and lack of generalization. Additionally, they often fail to consider equipment degradation as a factor.

By exploring gateway-level execution of analytics applications, businesses can potentially overcome at least some of the challenges associated with cloud-based approaches, ensuring more stable and efficient analytics while reducing potential security and connectivity risks. But it also raises the challenges in building analytics models and/or ML/AI models, which should be more efficient, less computation hungry and more reliable. Hence, regarding these further drawbacks, there is also need for improvement.

In view thereof, according to several examples of the present disclosure, there is proposed a solution to these drawbacks, shortcomings and deficiencies.

The present disclosure describes, according to several examples of the present disclosure, to have domain-informed and knowledge-based machine learning/artificial intelligence, ML/AI, algorithms for drive modelling, analytics, optimization, and control, possibly in a resource-constrained manner. Thus, the present disclosure focusses on utilization of physics-informed neural networks (PINNs) and describes a PINN-based method and a PINN-based system. However, the present disclosure is not restricted to PINNs, but may also be suitable for general domain-informed ML/Al models. Therefore, the present disclosure builds on an example of PINN-based drive condition and health monitoring but is transferrable to other analytics algorithms and ML algorithms for drives or drive systems, like, for example, for drive condition monitoring, health monitoring or anomaly detection for drives, drive systems or powertrains, for example.

It may also be transferrable or applicable on a running mode classification for classifying a running state into one of several classes, like running, accelerating, stopped or slowing down, for example. Moreover, it may also be transferrable or applicable on ML-based control and optimization of drive settings or drive parameters.

In more detail, according to several examples of the present disclosure, the present disclosure describes an application of a domain-informed ML/AI model, for example of a PINN, for an analytics environment for motors and drives, for example, in which the online monitoring for the operational condition of motors is constantly running. The present disclosure provides a framework to build a physics-informed ML/Al model, like a PINN model, that may take historical data, one or several physical models and simulation data into account. The PINN model is supposed to deploy for various scenarios, for example anomaly detection or optimal experimental design determination. The physics-informed ML/AI model may be constantly improved and updated by taken new measurements from drives or drive systems into account.

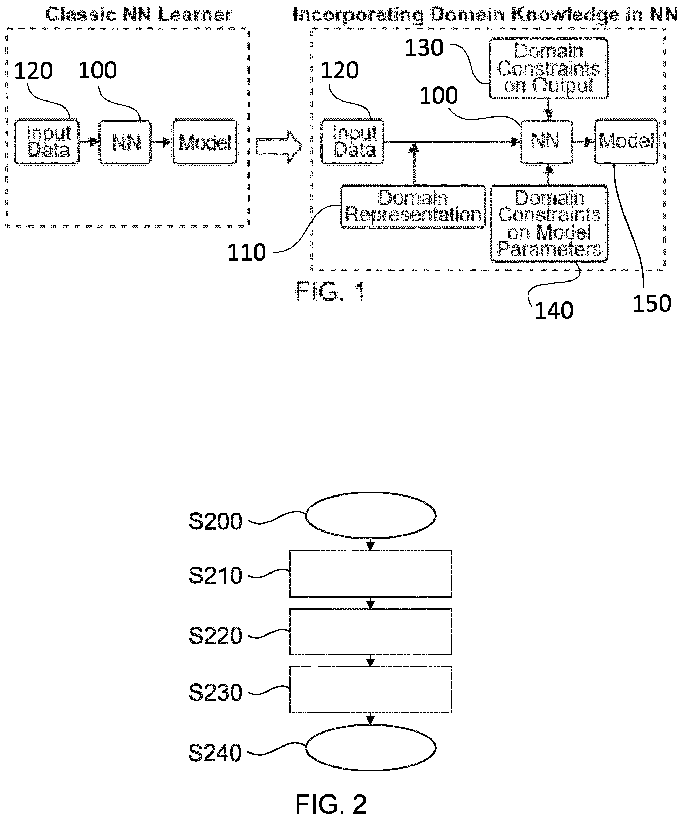

Referring now to Figure 1, Figure 1 schematically illustrates how to integrate domain knowledge in a neural network (NN) 100 according to several examples of the present disclosure.

In more detail, to overcome the drawbacks and shortcoming as outlined above, according to several examples of the present disclosure, there is provided to make use of domain-informed AI/ML models and/or domain-informed NNs (DINNs), for example physics-informed NNs (PINNs). The incorporation of domain knowledge like mathematical equations that (are known to) govern drive behavior under given circumstances and based on selected parameters and/or settings. In Figure 1, domain representation 110 is considered for the input data 120 input into the NN 100, wherein domain constraints on output 130 and domain constraints on model parameters 140 are considered for learning or training of the NN 100 to obtain a desired model 150. The mathematical equations comprise equations which describe physical behavior, for example.

Hence, a simulation tool may be used to extract mathematical equations for drive behavior, for example, and to simulate a set of drive scenarios to obtain a grid of data points. The set of drive scenarios is simulated to acquire the grid of data points, which is a mathematical basis for training ML/AI algorithms. Optionally, historical drive data for selected scenarios may be considered, for example. Thereon-based, the thus-obtained domain-informed NN for cheap, compute-efficient and physics-conforming forward inference on drive or on drive/gateway combination may be used.

Moreover, it is possible to enable determining an optimal design of experiment or measurement, for example for rare drive parameter and sensor measurements requests. It is further possible to enable to trigger specific detailed health assessment, monitoring, and condition monitoring algorithms to be executed, if a certain or predetermined condition may be true. Trigger of a further extension of the ML/AI model may be enabled and an uncertainty quantification may be possible, based on knowledge about a provided accuracy, and how additional measurements would impact guaranteed accuracy, for example.

Further, according to several examples of the present disclosure, a system and method to leverage domain-informed ML/AI models, like PINNs for example, for analytics or motion business analytics use cases, particularly on resource-constraint devices or device combinations, for example, may consist of: a method and workflow to train a domain-informed ML/AI model, like PINN for example, which considers and integrates into a ML/AI algorithm or model: (1) domain knowledge comprising physics-domain-knowledge or other domain knowledge, such as structures, restrictions and/or laws associated with the drive system, drive apparatus and/or drive application upon which the ML/Al algorithm or model is applied, for example, and (2) a set of data points obtained from either historian drive databases or from physics-consistent simulation tools, where a data point represents a drive behavior or drive behavior time series.

Both (1) and (2) can be extracted from domain-informed and/or physics-consistent simulation tools. Additionally or alternatively, both (1) and (2) can be extracted from historic or historian databases. Regarding (1), the extraction may be in the form of (a) mathematical equations that govern or describe a certain behavior, for example how a drive-related physical quantity, like torque for example, relates to another drive-related physical quantity, like speed for example. Regarding (2), the extraction may be in the form of (b) a scenario grid of points that comprehensively describes the potential drive behavior in the way of a mathematical basis, and thus allow, e.g., to interpolate (and extrapolate to some extend).

Hence, referring now to Figure 2, Figure 2 illustrates a flowchart indicative of a method according to several examples of the present disclosure.

The method for obtaining a domain-informed machine learning/artificial intelligence, ML/AI, model for drive analytics starts in S200.

In S210, the method comprises obtaining first data indicative of a set of data points, wherein each data point is associated with a behavior of a drive apparatus and/or drive system.

In S220, the method comprises obtaining second data indicative of domain knowledge comprising physics knowledge associated with a behavior of the drive apparatus and/or drive system and/or with an environment of the drive apparatus and/or drive system.

In S230, the method comprises training a neural network by jointly utilizing the first data and the second data to obtain the domain-informed ML/AI model for drive analytics.

The method ends in S240.

According to several examples of the present disclosure, the obtaining of the first data may comprise obtaining the set of data points from historic operational data and/or simulated operational data associated with behaviors of the drive apparatus and/or drive system. Additionally or alternatively, the obtaining of the first data may comprise obtaining, from a physics-consistent simulation tool and/or historic database, the set of data points in the form of a grid of scenario points associated with behaviors of the drive apparatus and/or drive system. Additionally or alternatively, the obtaining of the second data may comprise obtaining, from a physics-consistent simulation tool and/or historic database, the domain knowledge in the form of mathematical equations associated with behaviors of the drive apparatus and/or drive system and/or with the environment of the drive apparatus and/or drive system.

According to several examples of the present disclosure, the training may comprise training the ML/AI model on the first data by using the second data as constraints or validations.

According to several examples of the present disclosure, the method may further comprise obtaining additional data, wherein the additional data comprises at least one of additional first data and/or additional second data, and feedback on an output of the obtained domain-informed ML/AI model regarding the application of the obtained domain-informed ML/AI model on drive analytics. The method may further comprise updating the obtained domain-informed ML/AI model based on the obtained additional data. The updating may comprise retraining and/or fine-tuning the obtained domain-informed ML/Al model based on the obtained additional data.

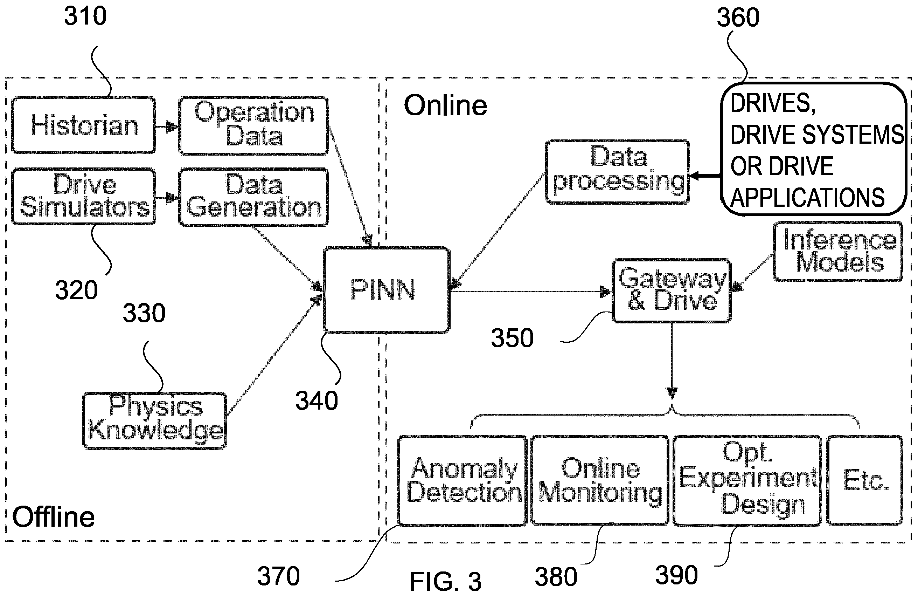

Referring now to Figure 3, Figure 3 illustrates a designed architecture and data processing, according to several examples of the present disclosure. Figures 3 outlines the incorporation of domain knowledge as schematically indicated in Figure 1 in more detail. Hence, according to several examples of the present disclosure, with reference to Figure 3, there is provided a framework that integrates a domain-informed AI/ML algorithm, for example a physics-informed ML model, into an analytics environment for motors and drives, for example. This integration may allow for direct deployment of the model on the gateways and drives, leading to enhanced and stable diagnosis of motor working conditions. The illustration shown in **Fehler! Verweisquelle konnte nicht gefunden werden**.3 comprises two main aspects:
- Offline model training, e.g., in the cloud: this phase involves combining at least two knowledge sources comprising such data points or grid of data points as outlined above and physics knowledge or domain knowledge. The data points may be obtained from historic data and/or from simulated data. In Figure 3, three distinct knowledge sources are shown as an example, namely historical data (as an example for first data) (from a historian 310), simulated data (as a further example for first data) (from drive simulators 320), and physics laws (as an example for second data) (from physics knowledge 330). The ML/Al model 340 is trained offline using this amalgamation or combination of information.
- Online deployment on gateways and drives: The trained ML/Al model 340 is deployed on the gateways and drives level 350, enabling real-time analytics of drive conditions (as an example for third data) obtained from drives, drive systems and/or drive applications 360, optionally in a preprocessed state. This timely feedback facilitates monitoring and proactive as well as preventive maintenance, and other analytics use case scenarios.

By uniting the power of domain-knowledge comprising physics-based knowledge for example, with data-driven learning, the resulting framework may achieve a comprehensive understanding of motor behavior and is able to build an efficient model that can analyze, "simulate", and predict the physical behavior of the physical system. "Simulate" may comprise forward computation based on ML/Al. One can then, for example, compare the prediction with monitored information to make informed decisions, or use it for other analytics applications, like anomaly detection 370, online monitoring 380, optimal experiment design 390, and asset health monitoring, for example.

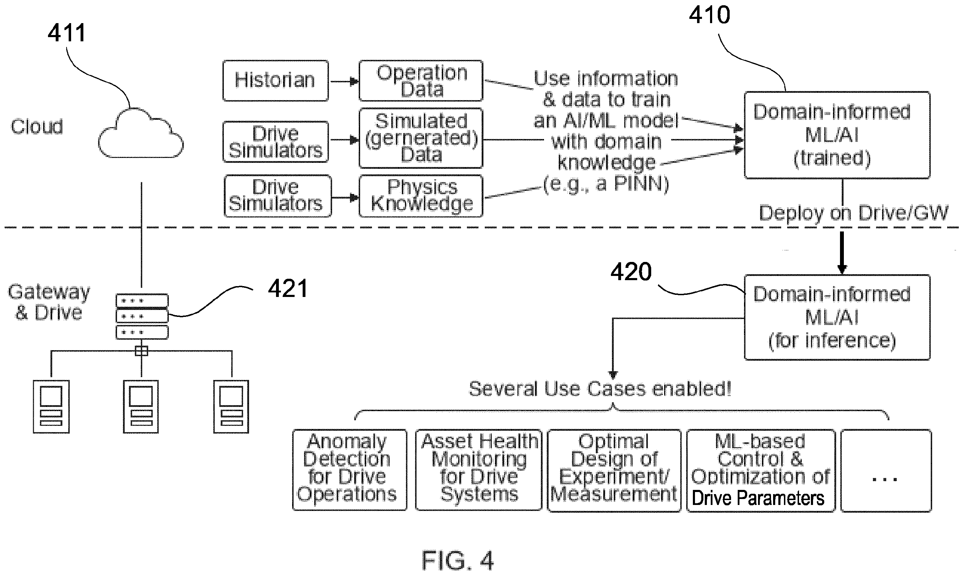

Referring now to Figure 4, Figure 4 illustrates a designed architecture and data processing, according to several examples of the present disclosure. The information provided in Figure 4 are quite similar to the information provided in Figure 3. However, Figure 4 differs from Figure 3 in that further emphasis is put to visually outline that the domain-informed ML/AI model 410 may be trained on cloud or cloud server 411, wherein the trained domain-informed ML/Al model 420 is applied on drive/gateway level 421.

Thus, according to several examples of the present disclosure, two parts may be considered for constructing a reliable analytics environment: (1) offline training and (2) online deployment. A prediction model is constructed based on physics-informed machine learning methods, like a PINN as outlined above, which can effectively combine domain knowledge and data during a learning process. The PINN model is constructed by utilizing different knowledge sources jointly for training: operational data and/or simulation data, in combination with physics knowledge.
- Operational data stored in the historian may represent the actual performance of motor drives over time, and may include information such as speed, torque, and temperature of the motor.
- Simulation data generated by numerical models may represent a predicted performance of a motor drive, and may be generated using numerical models that take into account the physics laws governing the behavior of motor drives. Such simulation models are often already created in the design phase of motors.
- The physics knowledge or underlying physics laws governing a motor's behavior may represent the fundamental principles that govern the behavior of motor drives. They include mathematical equations which comprise equations which describe physical behavior, such as the third principle of Newton's Law, or how friction affects the smooth rotation behavior, or what heat is generated during operation, for example.

For online deployment, PINN model is run on the gateway level. This makes it possible to make predictions about the motor's behavior in real time and to avoid a potential data traffic to cloud. The PINN model takes the (pre-processed) operational data from the drives as input. This data includes information such as the current, rotation speed, and temperature of the motor. The PINN model then uses this data to make predictions about the motor's future behavior, for example.

The inference models, working in conjunction with the deployed PINN, can perform a direct comparison between the predicted behavior generated by the PINN model and the observed KPIs of the motor. These KPIs include crucial parameters such as current, rotation speed, and other relevant measurements. By comparing the predicted behavior and observed KPIs the inference models can identify patterns, anomalies, or potential issues that warrant further attention.

According to several examples of the present disclosure, the comparing may further comprise obtaining a predetermined deviation threshold; and determining whether the calculated KPls deviate from the determined KPls by more than the predetermined deviation threshold. The initiating may comprise initiating the measure for controlling the behavior being monitored if it is determined that the predetermined deviation threshold is exceeded.

Hence, according to several examples of the present disclosure, a PINN-based ML/AI model for drive analytics, for example for predictive maintenance, prediction scenarios, health assessment scenarios and/or anomaly detection, is created, whereby the trained PINN model (training may be in the cloud) can be deployed on-premise on a drive/gateway combination to enable physics-consistent in-time analysis. Thus, historical data and simulated data are flexibly leveraged in a training process. Moreover, a framework for integrating, simultaneously, various data sources and physics laws into the ML/AI model training or learning process is enabled. For example, the trained ML/Al model may be used for using predicted physical behavior to compare against observed KPIs in order to diagnose a drive's condition, i.e. a condition of a drive system, a drive apparatus or a drive application. Moreover, the system could, when an anomaly or deviation from a PINN-consistent running mode is detected, for example, trigger a human expert to check such anomaly or deviation, and if an anomaly is verified for example, then find the anomaly, wherein if the human expert denies an anomaly, such human expert feedback may trigger an adaptation or improvement of the ML/AI model, for example when the human expert feedback is input into a feedback loop. Such adaptation or improvement may comprise to trigger a new training, with updated training data, where updated means that a new labeled data point, i.e. the "not-anomaly" as verified by the human expert, is integrated in the data updated training.

Hence, according to several examples of the present disclosure, there is disclosed a method, system and architecture, comprising at least some of the following functionalities: (1) system and method for setting up domain-informed ML/AI solutions on drive/gateway combinations to monitor operation condition of motor; (2) method to produce a prediction model by using historical data, simulated data and/or underlying physics law of a drive system; (3) system and method to conducting analysis and diagnosis on measured KPIs compared with predictions obtained from domain-informed ML/Al models.

Furthermore, such method and/or system as outlined above with reference to Figures 1 to 4 may then be the enabler technology for thereon-based advanced methods and functionalities, which may comprise at least one of the following:
- Usage for optimal design of experiment or measurement, for example in predictive maintenance scenarios, where an anomaly or slightly drifting drive behavior, for example, may trigger measurements, which may be reasonably optimally selected, like a measurement or a parameter request, for example, and/or may trigger execution of more detailed ML-based drive monitoring algorithms, or even ML-based drive control and optimization algorithms. For example, only if the DINN/PINN-based optimal design of experiment or measurement asks for it, during online monitoring, for example.
- Usage for triggering investigation or deep-dive investigation of a specific drive behavior, by means of triggering further calibration of the ML/Al model with a few, potentially reasonably optimally selected, data points, like simulated drive simulation scenarios, for example. Thus, it may be understood that "a-posteriori" optimal design of experiment is achieved for the next increment's integration of this a-priori information from further simulation scenario data points for training a next increment's ML/AI algorithm.
- Usage for uncertainty quantification and control algorithms.

In the following, as outlined in more detail, according to several examples of the present disclosure, the following steps may need to be considered regarding the obtainment and usage of the domain-informed ML/AI model as outlined above in detail.

Step 1, setup of simulation scenario grid: simulation data could be acquired by means of an appropriate software tool. To obtain drive simulation, a drive type or drive class may be selected, a physics-model underneath the simulation, i.e. upon which the simulation is based, may be obtained, and optional parameters, like speed or torque for example, may be set. The scenarios to be simulated should, ideally, be set up to cover all reasonable scenario grid points, like a mathematical basis in the linear algebra sense. For example, a combination of drive "A" with parameter "torque" = 1, 10, 100, 1000, and same for parameter "speed" = 1, 10, 100, 1000. Also, for example, different drive running modes may be considered, like running, accelerating, stopped and slowing down, for example. Hence, the entire problem/solution space may thus be sparsely but comprehensively enough covered. This may allow for collecting suitably enough simulation scenario inputs, i.e. data points, for training a domain-informed ML/Al model, like a PINN for example, with an a-priori known maximal or minimal accuracy or maximal or minimal uncertainty.

Step 2, in-cloud training of the domain-informed ML/Al model, like the PINN for example: to train a domain-informed ML/AI model using knowledge, like mathematical equations, Ordinary Differential Equations (ODEs) or Partial Differential Equations (PDEs) for example, and such data points as already mentioned above. Thus, the governing equations and the data points are combined to build a domain-informed ML/Al model. In this situation, the data points may be obtained from a simulation software or tool, and/or from historical data points or a historic database. A possible architecture for a PINN is a neural network, but it can also be a different architecture. The governing equations, for example in a neural network, will be reflected in the loss function.

Step 3, result and intended usage: the domain-informed ML/Al model, like the PINN for example, along with the known advantages, can be forward-executed in very little time, as opposed to simulation using a standard simulation software (based on a mathematical model and a numerical simulation setup) [an example for such a simulation tool would be ABB's "Virtual Drive PRO" software] , for example, on a drive/gateway combination, and can thus be used for condition monitoring, predictive maintenance, and/or ML/AI-based control.

As an additional step, usage of the system for condition monitoring and for optimal design of experiment or measurement, i.e., for triggering further actions, may be considered: furthermore, the DINN or PINN can also be used for optimal design of experiment or measurement, for example in predictive maintenance scenarios, and may trigger further actions, such as additional dedicated drive sensor measurements, for example, such that a wanted or desired KPI value, physical quantity or health quantity can be predicted and/or computed with high, ideally maximal, accuracy. Additionally or alternatively, it may trigger execution of more detailed ML/AI-algorithms when DINN- or PINN-based optimal design of experiment or measurement asks for it, for example.

It shall be noted that, thanks to the a-priori knowledge of the DINN- or PINN-based accuracy and uncertainty, methods for uncertainty quantification can optionally be integrated and may give hints at where a solution is certain, uncertain (and to what extend) or, for example, only roughly approximated.

It shall further be noted that, with regard to the usage of the system for optimal design of experiment or measurement, due to the knowledge-based structure and restrictions coming from mathematical equations or physics laws, for example, DINNs pr PINNs can be trained towards a predictive model accuracy while using a comparatively small amount of data points (in comparison so other solutions different from DINNs or PINNs for obtaining such predictive model accuracy).

If, for any given situation on the drive, the ML/AI model's accuracy or the ML/AI model's certainty is not sufficient, then through the optimal design of experiment or measurement, a set of additional required data points can be determined and requested from a drive sensor, for example. For example, certain parameters and/or time values (or time-series) may be requested. So that for this given situation a key performance indicator (KPI), an accuracy and/or a certainty can be predicted and or computed (or analyzed) with high accuracy and accurately, ideally with maximal accuracy and maximal accurately, by using only these additional dedicatedly requested data points. Hence, based on the PINN's knowledge integration (i.e. physics laws, for example), the setup as disclosed herein according to several examples of the present disclosure allows for a number of additionally required data points to achieve a wanted KPI, accuracy or certainty. This feature can also be used for ML/AI-based optimal control of drive, for example. Hence, the thus obtained system would allow to propose when to request from drive and/or which parameters to request, such that a wanted KPI quantity, physical quantity or health quantity can predicted and/or computed with high accuracy. This may allow for uncertainty quantification and for ML/AI-based drive custom calibration and drive control.

It shall further be noted that PINNs unveil further benefits and advantages when forward equation computation (like of PDEs for example) is computationally expensive and may require more complex simulation, Finite Elements Method (FEM), for example.

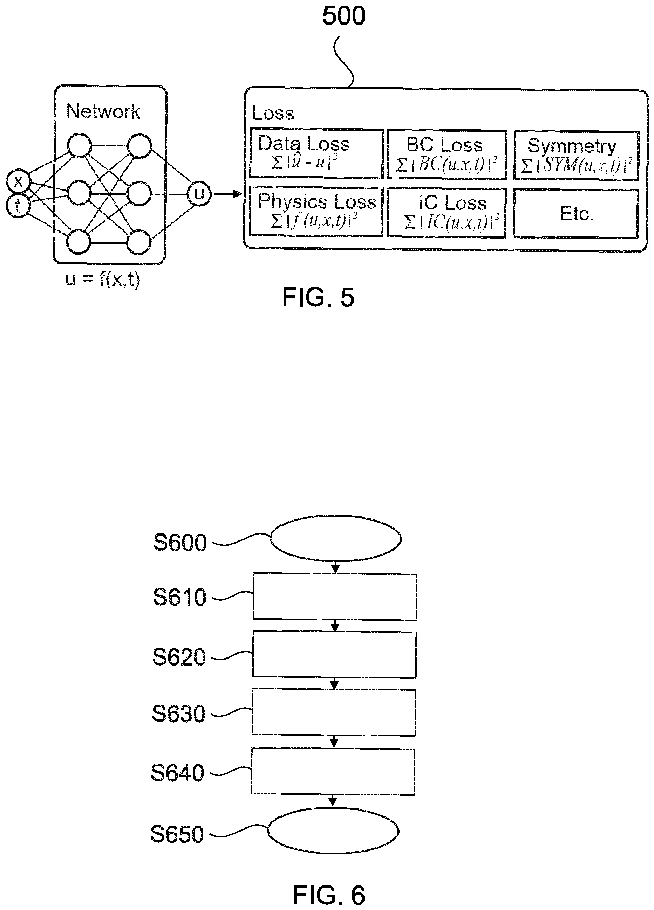

Further to the above, to describe an application of the domain-informed ML/AI model as outlined above with reference to Figures 1 to 4 in more detail, according to several examples of the present disclosure, it shall be noted that there are disclosed three components with regard to the domain-informed ML/Al model. A first component may represent a foundation of the other two components. The second component is to be developed upon the outcome of the first component. The third component requires real industrial application environment, more precisely utilizing the real measurement data from a considered apparatus, for example. The three components are the following:
1) Building up a domain-informed ML/AI model, for example a PINN model for drive system. PINN is a neural network model that can incorporate the data and physical governing equations. In general, the data can be obtained by measurement data, for example sensor data, simulated data, or both, as already outlined above in detail. The physical or mathematical equation(s) as well as other properties of the physical system, for example boundary condition (BC) or symmetry to name just a few examples, can be integrated into the loss function of the PINN, as schematically illustrated in Figure 5, such that the trained network will describe the differential equations of the underlaying system. With reference to Figure 5 as an example, the loss or loss function 500 comprises several elements, like Data Loss, BC Loss, Symmetry, Physics Loss and Initial Condition (IC) Loss, for example. For example, BC Loss may cause that certain boundary conditions like a maximum amount of available resources are satisfied, Symmetry may cause that certain symmetry properties or symmetry characteristic are satisfied, and Physics Loss may cause that physics laws like Newton's Law for example are satisfied. Hence, it shall be noted that domain knowledge can be incorporated into deep neural networks as a penalty term into the loss function that reflects the constraints imposed by the domain.
2) Creating specific applications, for example, anomaly detection on operation status of drive system. The anomaly detection can be achieved in the following way. The trained PINN model can quickly infer the theoretical working state of the drive based on information collected on drive, KPls about drive can be further calculated from the prediction. These KPIs can be compared with sensor measurements in order to verify theoretical behavior and actual behavior. When the actual behavior deviates far from the theoretical behavior, for example by a predetermined deviation threshold value, then the abnormal working state may be identified.
3) However, the drive system can degrade over time or change certain settings. Hence, the pre-trained PINN in component 1) may not be accurate anymore. PINN model can consider additional data to update the neural network, such that PINN model takes the newest operational behavior of the drive into account. It shall be noted that the PINN may be updated with additional data, which implies that the historical behavior has still effect on the neural network. But, since it is a continuous process, the latest data may have more weight than the older data.

Furthermore, the system's above three components could be wrapped into a feedback loop, for self-improvement for example. Hence, the system could, when an anomaly or deviation from a PINN-consistent running mode is detected, trigger a human expert to check such anomaly or deviation, and if an anomaly is verified, then the anomaly was detected, wherein if the human expert denies the anomaly, this human expert feedback may be part of a feedback loop to trigger adaptation or improvement of the ML/Al model, for example to trigger new training, with updated training data, where updated means that this human expert feedback as a new labeled data point is integrated in the updated training data.

Hence, referring now to Figure 6, Figure 6 illustrates a flowchart indicative of a method according to several examples of the present disclosure.

The method for analysing and/or predicting a behavior of a drive apparatus and/or drive system starts in S600.

In S610, the method comprises obtaining the domain-informed ML/AI model according to the method of the first aspect.

In S620, the method comprises obtaining third data from the drive apparatus and/or drive system, wherein the third data is indicative of operational data associated with the drive apparatus and/or drive system.

In S630, the method comprises inputting the third data into the domain-informed ML/AI model.

In S640, the method comprises, based on the inputting, analysing and/or predicting the behavior of the drive apparatus and/or drive system.

The method ends in S650.

According to several examples of the present disclosure, the obtaining of the third data may comprise monitoring the drive apparatus and/or drive system; and collecting the third data based on the monitoring.

According to several examples of the present disclosure, the monitoring may comprise monitoring a behavior of the drive apparatus and/or drive system. The method may further comprise comparing the analysed and/or predicted behavior with the monitored behavior and/or the behavior being monitored. The method may further comprise initiating a measure for controlling the monitored behavior and/or the behavior being monitored based on a result of the comparing.

According to several examples of the present disclosure, the analysing and/or predicting may comprises calculating key performance indicators, KPIs, associated with the analysed and/or predicted behavior. Additionally or alternatively, the monitoring may comprise determining KPIs associated with the drive apparatus and/or drive system based on the third data being indicative of measurement data of the drive apparatus and/or drive system. Additionally or alternatively, the comparing may comprise comparing the calculated KPls with the determined KPls.

According to several examples of the present disclosure, the comparing may further comprise obtaining a predetermined deviation threshold; and determining whether the calculated KPls deviate from the determined KPls by more than the predetermined deviation threshold. The initiating may comprise initiating the measure for controlling the behavior being monitored if it is determined that the predetermined deviation threshold is exceeded.

According to several examples of the present disclosure, the initiating may comprise at least one of:
- outputting a notification indicative of the result of the comparing;
- triggering an operator to verify the result of the comparing;
- triggering a control mechanism to adapt and/or manipulate the operation or a KPI of the drive apparatus and/or drive system;
- triggering further measurements;
- triggering execution of further monitoring, control and/or optimization algorithms;
- triggering of further investigation of a behavior;
- triggering an uncertainty quantification;
- reducing a power supply to the drive apparatus and/or drive system;
- reducing a movement speed and/or rotational speed of components of the drive apparatus and/or drive system; and
- stopping the drive apparatus and/or drive system.

According to several examples of the present disclosure, the method may further comprise receiving feedback on the analysed and/or predicted behavior and/or on the result of the comparing; and based on the feedback, updating at least one of:
- the domain-informed ML/AI model according to the method of the first aspect,
- the obtaining of the third data,
- the analysing and/or predicting, and
- the comparing.

According to several examples of the present disclosure, at least some of the following benefits and advantages are achieved based on the domain-informed ML/AI model as outlined above in detail with reference to Figures 1 to 5, in particular with reference to the methods according to Figures 2 and 6.

For example, creating a domain-informed ML/AI model, for example PINN-based model, for drive analytics enables for predictive maintenance, prediction scenarios, health assessment scenarios and/or anomaly detection, for example. Further, the trained ML/Al model, which may be trained in the cloud, can be deployed on-premise on a drive/gateway combination to enable physics-consistent in-time analysis. Therefore, a flexible leverage of historical data and/or simulated data in training process is enabled, the training taking place in the cloud for example. Moreover, to integrate, simultaneously, various data sources and domain knowledge like physics laws, mathematical equations, physics constraints and general physics knowledge, for example, may be implemented into the ML/Al model training process. Further, based on the advantages of DINNs, PINNs or domain knowledge exploitation, having access to a simulation software comprising specific parameter settings for drives is enabled. For example, scenario execution of a simulation software may be available for uncritical computational effort, which can be spent in the cloud or non-constraint environments. Further, a reasonably optimal set of scenarios may be simulated to represent a grid of "abstract data points", each of which may be a simulation scenario itself. Accordingly, few such abstract data points are needed for fitting a ML/AI model, i.e. function approximation. Minimal number of abstract (i.e. physical quantity for example) measurement points (simulation scenario points for example) required for an intended accuracy of a simulation-based prediction, including uncertainty quantification. Additionally, through DINNs or PINNs, it is possible to have domain knowledge or physics knowledge of a drive behavior to be considered and guaranteed in a PINN-based NN-forward-execution. Hence, said in other words, there is a guarantee for physical behavior, for example for asset health monitoring, anomaly detection and/or predictive maintenance. Optionally, an optimal design of experiment or measurement add-on allows to trigger rare drive sensor measurements requests, such that a wanted KPI or physical quantity and/or health quantity can be predicted and/or computed with high accuracy and highly accurately. Additionally or alternatively, for triggering other actions, including tweaks of uncertainty quantification. Having the DINN or PINN, it may be possible to benefit from faster (forward) execution of NN, i.e. a real-time benefit, as opposed to compute-intensive simulation solutions, for example. Moreover, having the DINN or PINN as the base of analytics algorithms and/or monitoring algorithms guarantees that known physical behavior comprising that physics laws are satisfied, for example, is given and taken as the baseline for monitoring and anomaly detection.

According to several examples of the present disclosure, there is provided a control apparatus for a drive application, the control apparatus being configured to carry out the above-outlined method, methods and/or individual method steps as outlined with reference to Figure 2 and/or 6.

In more detail, according to various examples, a control apparatus for a drive application is disclosed, wherein the control apparatus is configured to carry out at least one of the methods as outlined above with reference to Figure 2 and/or 6. For instance, the control apparatus may comprise a processor and a memory for storing instructions, which, when executed by the processor, may cause the control apparatus to e.g. execute the method steps as outlined above with reference to Figure 2 and/or 6. For such execution, the control apparatus may comprise several functional portions, e.g. an obtaining portion to carry out a process according to Step S210 of Figure 2, an obtaining portion to carry out a process according to Step S220 of Figure 2, and an training portion to carry out a process according to Step S230 of Figure 2. Additionally and/or alternatively, the control apparatus may comprise several functional portions, e.g. an obtaining portion to carry out a process according to Step S610 of Figure 6, an obtaining portion to carry out a process according to Step S620 of Figure 6, an inputting portion to carry out a process according to Step S630 of Figure 6, and an analysing and/or predicting portion to carry out a process according to Step S640 of Figure 6.

Moreover, according to several examples of the present disclosure, there is provided a control system comprising a first control apparatus as outlined above and/or a second control apparatus as outlined above. The first control apparatus configured to carry out the method as outlined with reference to Figure 2, the second control apparatus configured to carry out the method as outlined with reference to Figure 6. The first control apparatus, the second control apparatus and the third control apparatus are directly and/or indirectly communicatively connected.

Moreover, according to several examples of the present disclosure, there is provided an (industrial) automation system (or (industrial) drive application system) comprising a first control apparatus as outlined above and/or a second control apparatus as outlined above and/or the control system as outlined above. The first control apparatus configured to carry out the method as outlined with reference to Figure 2, the second control apparatus configured to carry out the method as outlined with reference to Figure 6. The first control apparatus, the second control apparatus, and the control system are directly and/or indirectly communicatively connected.

Moreover, according to several examples of the present disclosure, there is provided a computer-readable medium comprising instructions which, when executed by a computing system, cause the computing system to perform the method and/or methods as outlined above with reference to Figure 2 and/or 6. The computer-readable medium may be transitory or non-transitory, volatile or non-volatile.

Moreover, according to several examples of the present disclosure, there is provided a computer program product comprising instructions which, when executed by a computing system, cause the computing system to perform the method and/or methods as outlined above with reference to Figure 2 and/or 6.

Moreover, according to several examples of the present disclosure, there is provided a computing system configured to perform the method and/or methods as outlined above with reference to Figure 2 and/or 6.

The method and/or methods as outlined above with reference to Figure 2 and/or 6 may be computer implemented.

Moreover, according to several examples of the present disclosure, there is provided a use of a domain-informed ML/AI model as obtained according to the method as outlined with reference to Figure 2 and/or Figure 6.

Optional features of the method and/or methods according to Figure 2 and/or 6 may form part of any of the control apparatus, the control system, the automation system, the computer-readable medium, the computer program product, the computing system and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for obtaining a domain-informed machine learning/artificial intelligence, ML/AI, model (340; 420) for drive analytics, the method comprising:
obtaining (S210) first data (310; 320) indicative of a set of data points, wherein each data point is associated with a behavior of a drive apparatus and/or drive system;
obtaining (S220) second data (330) indicative of domain knowledge comprising physics knowledge associated with a behavior of the drive apparatus and/or drive system and/or with an environment of the drive apparatus and/or drive system; and
training (S230) a ML/AI model (410) by jointly utilizing the first data (310; 320) and the second data (330) to obtain the domain-informed ML/AI model (340; 420) for drive analytics.

2. The method according to claim 1,
wherein the obtaining of the first data (310; 320) comprises obtaining the set of data points from historic operational data and/or simulated operational data associated with behaviors of the drive apparatus and/or drive system; and/or
wherein the obtaining of the first data (310; 320) comprises obtaining, from a physics-consistent simulation tool and/or historic database, the set of data points in the form of a grid of scenario points associated with behaviors of the drive apparatus and/or drive system; and/or
wherein the obtaining of the second data (330) comprises obtaining, from a physics-consistent simulation tool and/or historic database and/or a physics knowledge repository, the domain knowledge in the form of mathematical equations associated with behaviors of the drive apparatus and/or drive system and/or with the environment of the drive apparatus and/or drive system.

3. The method according to claim 2, wherein the obtaining of the first data (310; 320) further comprises determining the grid of scenario points to be indicative of the problem space and/or solution space for the domain-informed ML/AI model (340, 420) to work in.

4. The method according to any of claims 1 to 3, wherein the training comprises training the ML/AI model (410) on the first data (310; 320) by using the second data (330) as constraints and/or validations.

5. The method according to any of claims 1 to 4, further comprising deploying the obtained domain-informed ML/Al model (340; 420) on gateway level (421) and/or drive level (421) of the drive system.

6. The method according to any of claims 1 to 5, further comprising:
obtaining additional data, wherein the additional data comprises at least one of
additional first data and/or additional second data, and feedback on an output of the obtained domain-informed ML/Al model (340; 420) regarding the application of the obtained domain-informed ML/AI model on drive analytics; and
updating the obtained domain-informed ML/AI model (340; 420) based on the obtained additional data,
wherein the updating comprises retraining and/or fine-tuning the obtained domain-informed ML/AI model (340; 420) based on the obtained additional data.

7. The method according to any of claims 1 to 6,
wherein the obtained domain-informed ML/Al model (340; 420) is a physics-informed neural network, PINN; and/or
wherein the physics knowledge is integrated into the loss function of the PINN.

8. A method for analysing and/or predicting a behavior of a drive apparatus (360) and/or drive system (360), the method comprising:
obtaining (S610) the domain-informed ML/AI model (340; 420) according to any of claims 1 to 7;
obtaining (S620) third data from the drive apparatus (360) and/or drive system (360), wherein the third data is indicative of operational data associated with the drive apparatus (360) and/or drive system (360);
inputting (S630) the third data into the domain-informed ML/AI model (340; 420); and
based on the inputting, analysing and/or predicting (S640) the behavior of the drive apparatus (360) and/or drive system (360).

9. The method according to claim 8, wherein the obtaining of the third data comprises:
monitoring the drive apparatus (360) and/or drive system (360); and
collecting the third data based on the monitoring.

10. The method according to claim 9,
wherein the monitoring comprises monitoring a behavior of the drive apparatus (360) and/or drive system (360);
wherein the method further comprises:
comparing the analysed and/or predicted behavior with the monitored behavior and/or the behavior being monitored; and
initiating a measure for controlling the monitored behavior and/or the behavior being monitored based on a result of the comparing.

11. The method according to any of claims 8 to 10,
wherein the analysing and/or predicting comprises calculating key performance indicators, KPIs, associated with the analysed and/or predicted behavior; and/or
wherein the monitoring comprises determining KPIs associated with the drive apparatus (360) and/or drive system (360) based on the third data being indicative of measurement data of the drive apparatus (360) and/or drive system (360); and/or
wherein the comparing comprises comparing the calculated KPls with the determined KPIs.

12. The method according to claim 10 or 11, wherein the initiating comprises at least one of:
outputting a notification indicative of the result of the comparing;
triggering an operator to verify the result of the comparing;
triggering a control mechanism to adapt and/or manipulate the operation or a KPI of the drive apparatus (360) and/or drive system (360);
triggering further measurements;
triggering execution of further monitoring, control and/or optimization algorithms;
triggering of further investigation of a behavior;
triggering an uncertainty quantification;
reducing a power supply to the drive apparatus (360) and/or drive system (360);
reducing a movement speed and/or rotational speed of components of the drive apparatus (360) and/or drive system (360); and
stopping the drive apparatus (360) and/or drive system (360).

13. The method according to any of claims 10 to 12, further comprising:
receiving feedback on the analysed and/or predicted behavior and/or on the result of the comparing; and
based on the feedback, updating at least one of:
the domain-informed ML/AI model (340; 420) according to any of claims 1 to 7,
the obtaining of the third data,
the analysing and/or predicting, and
the comparing.

14. A control apparatus, the control apparatus being configured to carry out the method of any of claims 1 to 7 and/or to carry out the method of any of claims 8 to 13.

15. A drive application system comprising a first control apparatus of claim 14 when configured to carry out the method of any of claims 1 to 7 and/or a second control apparatus of claim 14 when configured to carry out the method of any of claims 8 to 13, wherein the first control apparatus and the second control apparatus are directly or indirectly communicatively connected.

16. A computer program product comprising instructions which, when executed by a computing system, enable and/or cause the computing system to perform the method of any of claims 1 to 7 and/or of any of claims 8 to 13.
